# EUROPÄISCHE PATENTSCHRIFT

(11) **EP 1 480 005 B1**
(45) Veröffentlichungstag und Bekanntmachung des Hinweises auf die Patenterteilung: **18.10.2006**
(21) Anmeldenummer: 04400026.3
(22) Anmeldetag: 19.05.2004
(51) Int. Cl.: G01B 9/02, G02B 21/00, G02B 5/08, G02B 27/00, G02B 26/10, H04N 1/113, B32B 3/12

(54) **Leichtbaustrukturelement**
Light weight structural element
Elément de construction allégé

(30) Priorität: 22.05.2003 DE 10323176
(43) Veröffentlichungstag der Anmeldung: 24.11.2004
(73) Patentinhaber: Fraunhofer-Gesellschaft zur Förderung der angewandten Forschung e.V., 80686 München (DE)
(72) Erfinder: Risse, Stefan, 07749 Jena (DE); Damm, Christoph, 07743 Jena (DE); Harnisch, Gerd, 07743 Jena (DE); Peschel, Thomas, 07743 Jena (DE)
(74) Vertreter: Pfenning, Meinig & Partner GbR

(56) Entgegenhaltungen:
- WO-A-02/067570
- DE-C- 19 730 741
- GB-A- 968 025
- GB-A- 2 077 938
- US-A- 2 988 959
- US-A- 3 754 812
- US-A- 4 110 013
- US-A- 4 447 130
- US-A1- 2002 075 567

## Beschreibung

Die Erfindung betrifft Leichtbaustrukturelemente, bei denen eine Grundfläche und eine Deckfläche zueinander gegenüberliegend angeordnet sind. Die erfindungsgemäßen Leichtbaustrukturelemente bestehen im Wesentlichen aus einem einzigen Werkstoff, so dass es sich nicht um Verbundbauteile handelt. Sie können für unterschiedliche Applikationen eingesetzt werden.

Wegen des relativ geringen Massenträgheitsmomentes können sie als verschwenkbare optisch reflektierende Elemente, beispielsweise als so genannte "Scannerspiegel" eingesetzt werden. Außerdem können sie auch ohne weiteres im Vakuum eingesetzt werden und hier insbesondere als Fixierelemente für unterschiedliche Halbzeuge (Wafer) bzw. auch für die Handhabung von Masken, die bei den verschiedenen Oberflächenmodifizierungsprozessen in Vakuumanlagen eingesetzt werden, benutzt werden.

An sich bekannte Leichtbauteile weisen dabei in der Regel zumindest eine geschlossene Fläche auf. Es ist aber auch unter Berücksichtigung des Leichtbauaspektes ein gewisses Maß an Festigkeit und Steifigkeit solcher Elemente erforderlich. Zur Erfüllung dieser Forderungen werden bisher häufig rückseitig zur eigentlich genutzten Fläche solcher Elemente Versteifungselemente in Form von Profilelementen ausgebildet, die auch Hinterschneidungen aufweisen können. Festigkeit und Steifigkeit werden bei den bekannten Elementen im Wesentlichen durch diese Strukturen bestimmt. Die entsprechende Rückseite solcher Leichtbauelemente kann dann üblicherweise nicht genutzt werden.

Leichtbauelemente, die in Form von Verbundbauteilen, bei denen zwei plattenförmige Elemente, die stoffschlüssig, durch Löten, Schweißen oder eine Klebverbindung mit einer Steg- oder Gitterstruktur verbunden sind, erfordern einen erheblichen Herstellungsaufwand, der mit entsprechenden Kosten verbunden ist. In der Regel ist nach der Herstellung der Verbindung zwischen den Platten und der tragenden Struktur eine nachfolgende Endbearbeitung von Oberflächen der Platten, die nachfolgend genutzt werden sollen, erforderlich.

Verbundbauteile, die mittels stoffschlüssiger Verbindungen hergestellt worden sind, stellen üblicherweise kein homogenes Bauteil dar, da zumindest für das Fügen andere Werkstoffe eingesetzt werden, die infolge Alterung oder unterschiedlicher Wärmeausdehnungskoeffizienten zu einer zeitlichen Veränderung der Eigenschaften und gegebenenfalls auch Form solcher Leichtbauteile führen können.

Es sind aber auch Verbundbauteile, bei denen unterschiedlichste Fasern, wie Keramik- oder Kohlefasern mittels Polymeren (z.B. Harzen) gebunden sind, als an sich für den Leichtbau geeignete Werkstoffe bekannt. Auch hier wirkt sich der Kostenaspekt für die Herstellung nachteilig aus. Solche polymergebundenen Werkstoffe sind aber auch für viele Anwendungen unter Vakuumbedingungen ungeeignet. Außerdem müssen eine erhebliche Anisotropie und die entsprechenden Wärmeausdehnungskoeffizienten berücksichtigt werden, die viele Applikationen ausschließen können.

Außerdem ist aus WO/02/067570 A1 Scheiben-Scanner-Einheit für das scannen von Nipkow CD's bekannt. Dabei sind in Scannerelementen Perforationen ausgebildet.

Ausgehend hiervon ist es daher Aufgabe der Erfindung Leichtbaustrukturelemente zur Verfügung zu stellen, die kostengünstig herstellbar sind und über lange Einsatzzeiträume konstante mechanische und thermische Eigenschaften einhalten können.

Erfindungsgemäß wird diese Aufgabe mit einem Leichtbaustrukturelement, das die Merkmale des Anspruchs 1 aufweist, gelöst. Vorteilhafte Ausgestaltungsformen und Weiterbildungen der Erfindung können mit den in den untergeordneten Ansprüchen bezeichneten Merkmalen erreicht werden.

Die erfindungsgemäßen Leichtbaustrukturelemente stellen ein einziges Bauteil dar, bei dem eine Grundfläche und eine Deckfläche zueinander gegenüberliegend angeordnet sind. Innerhalb des Leichtbaustrukturelementes sind mehrere jeweils parallel zueinander ausgerichtete zylinderförmige Hohlräume ausgebildet, die man auch als Bohrungen bezeichnen kann.

Mindestens eine der genannten Flächen, also die Grundfläche oder die Deckfläche sollen eine geschlosene Funktionsfläche bilden, die keine Durchbrechungen oder auch gegebenenfalls Vertiefungen, bzw. Erhebungen aufweisen.

Grundfläche und/oder Deckfläche können unabhängig davon, ob sie eine Funktionsfläche bilden oder nicht, als ebene planare Fläche ausgebildet sein.

Insbesondere für optische Anwendungen können Funktionsflächen aber auch in konkav bzw. konvex auch asphärisch gewölbter Form ausgebildet worden sein. An einer Funktionsfläche können auch mehrere Bereiche so gewölbt oder als Freiformfläche(n) ausgebildet sein.

An dem erfindungsgemäßen Leichtbaustrukturelement sollten zylindrische Hohlräume zumindest in jeweils einer gemeinsamen Ebene ausgebildet sein, die wiederum besonders bevorzugt parallel zu den jeweiligen Grund- und/oder Deckflächen ausgerichtet sein sollte.

Die zylindrischen Hohlräume können bis an mindestens einen äußeren Rand des Leichtbaustrukturelementes geführt sein, so dass sie beispielsweise als Sacklochbohrungen oder Durchgangsbohrungen mit zumindest einer randseitigen Öffnung am Leichtbaustrukturelement vorliegen.

An einem erfindungsgemäßen Leichtbaustrukturelement können mehrere parallel zueinander ausgerichtete zylindrische Hohlräume zu mehreren Gruppen, also mindestens zwei Gruppen zusammengefasst werden. Dabei können die zylindrischen Hohlräume einer Gruppe in Bezug zu zylindrischen Hohlräumen einer weiteren Gruppe in bestimmten Winkelausrichtungen zueinander ausgerichtet sein. Die jeweiligen Winkel können bevorzugt im Bereich zwischen 60° und 90° ausgewählt werden. So besteht die Möglichkeit, solche Gruppen von zylindrischen Hohlräumen so in einem erfindungsgemäßen Leichtbaustrukturelement auszubilden, dass sie sich in einem rechten Winkel zueinander befinden und gegebenenfalls in einer gemeinsamen Ebene liegen, so dass sich zylindrische Hohlräume der jeweiligen Gruppen schneiden und ein Gitter sich entsprechend kreuzender zylindrischer Hohlräume gebildet wird.

Es besteht aber auch die Möglichkeit in dieser Form Gruppen von zylindrischen Hohlräumen in Ebenen anzuordnen, die jeweils einen entsprechenden Abstand zueinander aufweisen, der unter Berücksichtigung der Innendurchmesser zylindrischer Hohlräume zumindest ein teilweises Schneiden der sich überkreuzenden zylindrischen Hohlräume gewährleisten kann.

Allein oder zusätzlich können aber auch zylindrische Hohlräume unterschiedlicher Gruppen in verschiedenen zueinander und dabei in einer versetzten Anordnung ausgebildet sein. Dementsprechend liegen dann zylindrische Hohlräume der jeweiligen unterschiedlichen Gruppen nicht exakt mit ihren jeweiligen Längsachsen in einer Ebene, sondern die Längsachsen zylindrischer Hohlräume der jeweiligen unterschiedlichen Gruppen sind in einem Abstand zueinander angeordneten Ebenen angeordnet.

Der Anteil des Volumens, der Summe aller zylindrischen Hohlräume, die in einem Leichtbaustrukturelement vorhanden sind, sollte möglichst mindestens 40 %, bevorzugt mindestens 60 % in Bezug zum Gesamtvolumen des Leichtbaustrukturelementes betragen, wobei unter Gesamtvolumen das Volumen zu verstehen sein soll, das ein voller Körper ohne zylindrische Hohlräume ausfüllt.

Die zylindrischen Hohlräume innerhalb eines Leichtbaustrukturelementes sollen so angeordnet, ausgebildet und dimensioniert sein, dass zumindest eine Beeinflussung der Gestalt und Geometrie einer als Funktionsfläche genutzten Grund- oder Deckfläche vermieden werden kann.

Vorteilhaft ist es außerdem, wenn zylindrische Hohlräume in der Ebene ausgebildet sind, in der der Massenschwerpunkt und/oder die neutrale Faser des jeweiligen Leichtbaustrukturelementes liegt. Dieser Sachverhalt kann noch verstärkt werden, wenn der Volumenanteil zylindrischer Hohlräume in dieser Ebene bzw. auch im Bereich dieser Ebene größer als in hierzu beabstandeten weiteren Ebenen des Leichtbaustrukturelementes ist. In dieser Form können dann die äußeren Flächenbereiche, also Grund- und/oder Deckfläche unbeeinflusst bleiben und in diesen Bereichen eine erhöhte Steifigkeit und Festigkeit eingehalten werden und trotzdem die Gesamtmasse eines Leichtbaustrukturelementes, bei ausreichend großer Festigkeit und Steifigkeit, relativ weit reduziert werden kann.

Ein erfindungsgemäßes Leichtbaustrukturelement kann auch so ausgebildet sein, dass es um eine Rotationsachse dreh- bzw. verschwenkbar ist, wie dies häufig bei optisch reflektierenden Elementen, für die erfindungsgemäße Leichtbaustrukturelemente eingesetzt werden können, gewünscht ist. In diesem Fall kann ein zylindrischer Hohlraum um eine Rotationsachse ausgebildet und zu dieser fluchtend ausgerichtet sein. Durch einen solchen zylindrischen Hohlraum kann dann eine Welle oder Drehachse hindurchgeführt sein, die wiederum mittels Lagerungen eine Verdrehung oder Verschwenkung eines so gehaltenen und gelagerten Leichtbaustrukturelementes ermöglichen.

Für den Fall, dass erfindungsgemäße Leichtbaustrukturelemente eine rotationssymmetrische Außenkontur aufweisen, sollte die Rotationsachse möglichst durch den Mittelpunkt eines entsprechenden Kreises verlaufen.

Es kann aber auch mindestens ein zylindrischer Hohlraum durch eine Funktionsfläche bzw. auch von der Deck- bis zur Grundfläche durch das gesamte Leichtbaustrukturelement hindurchgeführt sein. Der eine oder auch mehrere zylindrische Hohlraum/-räume kann/können dann z.B. für eine Justierung (auch optisch) und/oder Fixierung des Leichtbaustrukturelementes genutzt werden. Solche zylindrischen Hohlräume sind bevorzugt orthogonal zu den bereits vorab in anderen Ebenen angeordneten zylindrischen Hohlräumen ausgerichtet.

Die erfindungsgemäßen Leichtbaustrukturelemente können bevorzugt aus verschiedenen anorganischen Werkstoffen hergestellt worden sein, wie dies beispielsweise Metalle, Metalllegierungen, Keramiken, Gläser oder Glas-Keramiken sind.

Die jeweilige Werkstoffauswahl kann unter unterschiedlichsten applikationsspezifischen Anforderungen erfolgen. So können für eine Reduzierung der Gesamtmasse geeignete Metalle, wie beispielsweise Aluminium oder auch Beryllium sowie Legierungen dieser Metalle eingesetzt werden. Leichtbaustrukturelemente können aber auch aus Kupfer oder Kupferlegierungen hergestellt worden sein.

Insbesondere metallische Leichtbaustrukturelemente können aus einem vollen Werkstoff durch einen Werkstoffabtrag, der zur Ausbildung zylindrischer Hohlräume führt, hergestellt werden. Hierbei kann beispielsweise eine spanende Bearbeitung durch Bohren oder auch die Ausbildung zylindrischer Hohlräume durch Erodieren erreicht werden.

Für den Fall, dass erfindungsgemäße Leichtbaustrukturelemente elektrisch nicht leitend sein sollen, sind Gläser oder auch Glas-Keramiken bevorzugte Werkstoffe. Insbesondere bei Glas-Keramiken können vorteilhaft solche eingesetzt werden, die einen extrem kleinen Wärmeausdehnungskoeffizienten aufweisen. In diesen Fällen können dann erfindungsgemäße Leichtbaustrukturelemente vorteilhaft als Träger für Wafer bzw. für Masken in Vakuumprozessanlagen eingesetzt werden.

Die erfindungsgemäßen Leichtbaustrukturelemente sind aber auch vorteilhaft, da eine Evakuierung problemlos und in kurzer Zeit erfolgen kann.

Zylindrische Hohlräume in Leichtbaustrukturelementen können neben einer Bearbeitung, bei der ein Werkstoffabtrag erfolgt, auch durch ein Formgebungsverfahren hergestellt werden.

Nachfolgend soll die Erfindung beispielhaft näher erläutert werden.

Dabei zeigen:
- Figur 1: ein Beispiel eines erfindungsgemäßen Leichtbaustrukturelementes, das als reflektierendes optisches Element einsetzbar ist;
- Figur 2: ein Beispiel eines erfindungsgemäßen Leichtbaustrukturelementes, das als Träger für die Handhabung von Wafern geeignet ist und
- Figur 3: ein Beispiel eines erfindungsgemäßen Leichtbauelementes, das als Ablage (Tisch) für die Handhabung von Halbleitersubstraten geeignet ist.

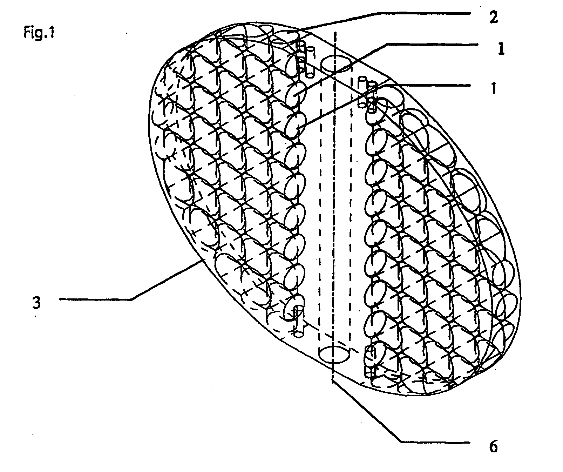

Das in Figur 1 gezeigte Beispiel eines Leichtbaustrukturelementes aus Aluminium, weist eine ebene planare Funktionsfläche 3, die für elektromagnetische Strahlung reflektierend ist, auf. Es ist rotationssymmetrisch ausgebildet und weist eine zylindrische äußere Mantelfläche zwischen der Funktionsfläche 3 und der dieser gegenüberliegenden Grundfläche auf.

Durch den Mittelpunkt verläuft eine Rotationsachse 6, die durch eine Strich-Punkt-Linie angedeutet ist. Um diese Rotationsachse 6 ist ein zylindrischer Hohlraum durch das gesamte Leichtbaustrukturelement geführt, die zur Aufnahme einer Welle dienen kann, mit deren Hilfe das Leichtbaustrukturelement um die Rotationsachse 6 gedreht bzw. verschwenkt werden kann, was die Möglichkeit eröffnet, das Leichtbaustrukturelement als so genannter optischer "Scannerspiegel" einzusetzen.

Bei dem in Figur 1 gezeigten Beispiel eines Leichtbaustrukturelementes sind zwei Gruppen von zylindrischen Hohlräumen 1 und 2 ausgebildet worden, die mit ihren Längsachsen jeweils parallel zumindest zur Funktionsfläche 3 ausgerichtet sind. Dabei sind die zylindrischen Hohlräume 1 und 2 einer Gruppe in einem Winkel von 90° zu den zylindrischen Hohlräumen 1 und 2 der jeweils anderen Gruppe ausgerichtet, so dass sich die zylindrischen Hohlräume 1 und 2 der beiden Gruppen miteinander schneiden und eine Art Tonnengewölbe als tragende Gitterstruktur innerhalb des Leichtbaustrukturelementes bilden. Die zylindrischen Hohlräume 1 und 2 konnten bei diesem Beispiel durch Bohren ausgebildet werden, wobei die jeweiligen zylindrischen Hohlräume 1 und 2 an der äußeren Mantelfläche zwischen Funktionsfläche 3 und der hinteren Grundfläche offen sind. Durch die rotationssymmetrische Form dieses Leichtbaustrukturelementes sind die entsprechenden zylindrischen Hohlräume 1 und 2 unterschiedlich lang innerhalb des Leichtbaustrukturelementes ausgebildet.

Zylindrische Hohlräume 1 und 2 mit unterschiedlicher Länge innerhalb eines Leichtbaustrukturelementes können aber auch gezielt gewählt werden, um beispielsweise bestimmte mechanische oder auch thermische Eigenschaften einhalten zu können.

Die eine, bei diesem Beispiel reflektierende Funktionsfläche 3, gegebenenfalls aber auch eine entsprechende zweite Funktionsfläche auf der dieser gegenüberliegenden Seite des Leichtbaustrukturelementes können durch geeignete Oberflächenbearbeitungstechniken, wie beispielsweise Ultrapräzisionsdrehen oder - fräsen in gewünschter optischer Qualität hergestellt werden.

Wie bereits im allgemeinen Teil der Beschreibung angesprochen, können Funktionsflächen 3 auch in konkav bzw. konvex gewölbter Form ausgebildet sein und es besteht prinzipiell die Möglichkeit an einem Leichtbaustrukturelement eine Funktionsfläche 3 als ebene planare Fläche und eine weitere Funktionsfläche in konkav oder konvex gewölbter Form auszubilden. Werden zwei Funktionsflächen für eine Kollimierung und/oder Fokussierung elektromagnetischer Strahlung eingesetzt, kann eine Funktionsfläche 3 konkav, die gegenüberliegende Funktionsfläche 3 konvex oder auch mit unterschiedlicher Winkelneigung einer konvexen und konkaven Gestalt ausgebildet sein.

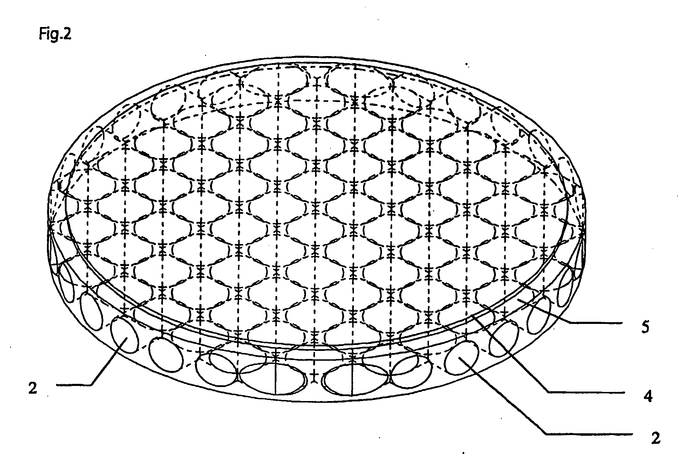

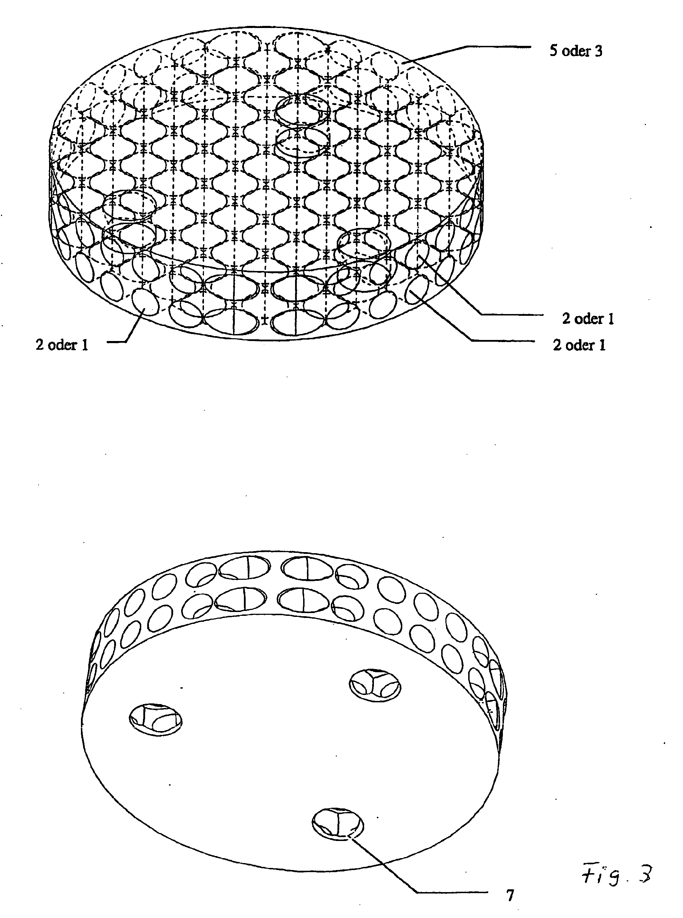

Das in Figur 2 gezeigte Leichtbaustrukturelement kann als Träger die Handhabung von Wafern innerhalb von Vakuumanlagen eingesetzt werden. Es kann aus Glas oder einer Glas-Keramik hergestellt worden sein. Auch bei diesem Beispiel wurde eine rotationssymmetrische Gestalt gewählt und die zylindrischen Hohlräume 2 wurden von der äußeren Peripherie des Leichtbaustrukturelementes von einer Seite bis hin zur jeweils gegenüberliegenden Seite geführt, so dass die zylindrischen Hohlräume 2 an beiden Seiten Öffnungen aufweisen.

Auch bei diesem Beispiel wurden wieder zwei Gruppen von zylindrischen Hohlräumen 2 ausgebildet, deren Längsachsen in einem Winkel von 90° zueinander ausgerichtet sind. Die zylindrischen Hohlräume 2 der beiden Gruppen sind jeweils parallel zueinander und äquidistant angeordnet.

Auf der Deckfläche dieses Leichtbaustrukturelementes ist eine Funktionsfläche 5 als Halteelement (Chuck) für einen Wafer 4 ausgebildet. Die Funktionsfläche 5 ist hier eine ebene planare vollständig geschlossene Fläche. In nicht dargestellter Form kann auf der Funktionsfläche 5 auch eine Oberflächenstruktur ausgebildet sein. Dies ist besonders vorteilhaft, wenn das Leichtbaustrukturelemente als elektrostatisches Halteelement eingesetzt werden soll. In diesem Fall ist es im Wesentlichen aus einem dielektrischen Werkstoff gebildet und zusätzliche elektrisch leitende Elemente vorhanden sind.

Solche Halteelemente können aber auch allein oder zusätzlich Durchbrechungen oder zylindrische Hohlräume aufweisen, die durch mindestens eine Funktionsfläche hindurchgeführt und an eine einen Unterdruck erzeugende Einheit (Vakuumpumpe) angeschlossen sind, so dass auf der Funktionsfläche angeordnete Gegenstände mittels Unterdruck gehalten werden können.

Das mit Figur 3 in zwei unterschiedlichen Perspektiven dargestellte Leichtbaustrukturelement kann als Ablage (Tisch) für die Handhabung von Halbleitersubstraten eingesetzt werden. Es kann aus Metall oder den elektrisch isolierenden Gläsern bzw. Glas-Keramiken hergestellt worden sein.

In der oberen perspektivischen Darstellung von Figur 3 ist eine obere ebene Funktionsfläche 3, die vollständig geschlossen ist, ausgebildet.

Innerhalb dieses Leichtbaustrukturelementes sind zylindrische Hohlräume in mehreren Gruppen und in zwei parallel zueinander ausgerichteten Ebenen ausgebildet. Dabei schneiden sich zylindrische Hohlräume 1 und 2 in den beiden Ebenen durch entsprechende Winkelausrichtung zylindrischer Hohlräume von Gruppen in der jeweiligen Ebene.

Es können aber auch zylindrische Hohlräume 1 und 2 auch in unterschiedlichen Elementen jeweils parallel zueinander ausgerichtet sein.

Die Ebenen können so angeordnet sein, dass zwischen Ebenen die neutrale Faser und/oder der Masseschwerpunkt des Leichtbaustrukturelementes angeordnet ist.

Eine solche Ausbildung von Leichtbaustrukturelementen kann aber auch für andere Applikationen, beispielsweise für reflektierende optische Elemente gewählt werden.

In der unteren Darstellung von Figur 3 ist eine weitere Funktionsfläche 3, die auf der gegenüberliegenden Seite, der Funktionsfläche 5 die in der oberen Darstellung von Figur 3 erkennbar ist, verdeutlicht.

In dieser Funktionsfläche 3 sind drei mechanische Befestigungen 7 in, unter Berücksichtigung der Position der neutralen Faser und/oder des Masseschwerpunktes und in Bezug zu dieser Position ausgebildet, die mit zylindrischen Hohlräumen 1 und 2 innerhalb des Leichtbaustrukturelementes kommunizieren können. Diese Befestigungen 7 können für eine kinematische definierte Fixierung genutzt werden und sollten bevorzugt an Besselschen Punkten angeordnet sein.

Zylindrische Hohlräume 1 und 2 können nicht nur zu einer gewünschten Massereduzierung von Leichtbaustrukturelementen führen, sondern sie können auch für eine Funktionserweiterung genutzt werden. So können beispielsweise unterschiedlichste Leitungen durch zylindrische Hohlräume 1 und 2 hindurchgeführt werden. Es besteht aber auch die Möglichkeit, ein Kühlfluid durch zylindrische Hohlräume 1 und 2 zu führen, um einen Kühleffekt an Leichtbaustrukturelementen erreichen zu können.

## Patentansprüche

1. Leichtbaustrukturelement mit einer Grundfläche und einer dieser gegenüberliegend angeordneten Deckfläche,
**dadurch gekennzeichnet, dass** innerhalb des Leichtbaustrukturelementes mehrere jeweils parallel zueinander ausgerichtete zylinderförmige Hohlräume (1, 2) bis an mindestens einen äußeren Rand des Leichtbaustrukturelementes geführt und als Sackloch- oder Durchgangsbohrung ausgebildet sind und
die Grundfläche und/oder Deckfläche eine geschlossene Funktionsfläche (3) bilden.

2. Leichtbaustrukturelement nach Anspruch 1, **dadurch gekennzeichnet, dass** zylindrische Hohlzylinder (1, 2) in jeweils einer gemeinsamen Ebene ausgebildet sind.

3. Leichtbaustrukturelement nach einem der vorhergehenden Ansprüche, **dadurch gekennzeichnet, dass** zylindrische Hohlräume (1, 2) zu mindestens zwei Gruppen zusammengefasst sind, dabei zylindrische Hohlräume (1, 2) einer jeweiligen Gruppe parallel zueinander und die zylindrischen Hohlräume einer weiteren Gruppe in einem jeweils gleichen Winkel zwischen 60° und 90° zueinander ausgerichtet und/oder zylindrische Hohlräume (1, 2) von Gruppen in verschiedenen Ebenen versetzt zueinander angeordnet sind.

4. Leichtbaustrukturelement nach einem der vorhergehenden Ansprüche, **dadurch gekennzeichnet, dass** zylindrische Hohlzylinder (1, 2) in mindestens zwei parallel zueinander ausgerichteten Ebenen und in unterschiedlichen Ebenen angeordnete zylindrische Hohlräume (1, 2) ebenfalls parallel zueinander angeordnet sind.

5. Leichtbaustrukturelement nach einem der vorhergehenden Ansprüche, **dadurch gekennzeichnet, dass** zwischen zwei Ebenen, in denen die zylindrischen Hohlräume (1, 2) ausgebildet sind, die neutrale Faser und /oder der Masseschwerpunkt angeordnet ist.

6. Leichtbaustrukturelement nach einem der vorhergehenden Ansprüche, **dadurch gekennzeichnet, dass** der Anteil der zylindrischen Hohlräume (1, 2) mindestens 40 % des Gesamtvolumens beträgt.

7. Leichtbaustrukturelement nach einem der vorhergehenden Ansprüche, **dadurch gekennzeichnet, dass** zylindrische Hohlräume (1, 2) in der Ebene des Massenschwerpunktes und/oder der neutralen Faser des jeweiligen Leichtbaustrukturelementes angeordnet sind.

8. Leichtbaustrukturelement nach Anspruch 5, **dadurch gekennzeichnet, dass** der Volumenanteil zylindrischer Hohlräume (1, 2) in der Ebene des Massenschwerpunktes und/oder der neutralen Faser größer, als in dazu beabstandeten Ebenen ist.

9. Leichtbausstrukturelement nach einem der vorhergehenden Ansprüche, **dadurch gekennzeichnet, dass** ein zylindrischer Hohlraum (2) um eine Rotationsachse (6) ausgebildet und zu dieser fluchtend ausgerichtet ist.

10. Leichtbaustrukturelement nach einem der vorhergehenden Ansprüche, **dadurch gekennzeichnet, dass** mindestens eine Funktionsfläche (3) einen optischen Reflektor bildet.

11. Leichtbaustrukturelement nach einem der vorhergehenden Ansprüche, **dadurch gekennzeichnet, dass** es aus einem Metall, einer Metalllegierung, einer Keramik, einem Glas oder einer Glaskeramik gebildet ist.

12. Leichtbaustrukturelement nach einem der vorhergehenden Ansprüche, **dadurch gekennzeichnet, dass** zylindrische Hohlräume parallel zu Grundfläche und/oder Deckfläche ausgerichtet sind.

13. Leichtbaustrukturelement nach einem der vorhergehenden Ansprüche, **dadurch gekennzeichnet, dass** zylindrische Hohlräume mit unterschiedlicher Länge vorhanden sind.

14. Leichtbaustrukturelement nach einem der vorhergehenden Ansprüche, **dadurch gekennzeichnet, dass** an mindestens einer Funktionsfläche eine Oberflächenstruktur ausgebildet ist.

15. Leichtbaustrukturelement nach einem der vorhergehenden Ansprüche, **dadurch gekennzeichnet, dass** es als elektrostatisches Halteelement ausgebildet ist.

16. Leichtbaustrukturelement nach einem der vorhergehenden Ansprüche, **dadurch gekennzeichnet, dass** mindestens eine Durchbrechung oder mindestens ein zylindrischer Hohlraum durch die Grund-, Deck- und/oder mindestens eine Funktionsfläche (3, 5) hindurch geführt ist.

## Claims

1. Light-weight structural element having a base surface and a cover surface arranged opposite thereto, **characterized in that** a number of cylindrical cavities (1, 2) respectively aligned parallel to one another are guided inside the light-weight structural element up to at least one outer edge of the light-weight structural element and are formed as a blind bore or through-bore, and
the base surface and/or cover surface form(s) a closed functional surface (3).

2. Light-weight structural element according to Claim 1, **characterized in that** cylindrical cavities (1, 2) are formed respectively in a common plane.

3. Light-weight structural element according to one of the preceding claims, **characterized in that** cylindrical cavities (1, 2) are combined to form at least two groups, cylindrical cavities (1, 2) of a respective group being aligned parallel to one another, and the cylindrical cavities of a further group being aligned at an identical angle of between 60° and 90° to one another, and/or cylindrical cavities (1, 2) of groups in various planes being arranged offset from one another.

4. Light-weight structural element according to one of the preceding claims, **characterized in that** cylindrical cavities (1, 2) are arranged in at least two planes aligned parallel to one another, and cylindrical cavities (1, 2) arranged in different planes are likewise arranged parallel to one another.

5. Light-weight structural element according to one of the preceding claims, **characterized in that** the neutral fibre and/or the centroid are/is arranged between two planes in which the cylindrical cavities (1, 2) are formed.

6. Light-weight structural element according to one of the preceding claims, **characterized in that** the fraction of the cylindrical cavities (1, 2) is at least 40% of the total volume.

7. Light-weight structural element according to one of the preceding claims, **characterized in that** cylindrical cavities (1, 2) are arranged in the plane of the centroid and/or the neutral fibre of the respective light-weight structural element.

8. Light-weight structural element according to Claim 5, **characterized in that** the volume fraction of cylindrical cavities (1, 2) is greater in the plane of the centroid and/or the neutral fibre than in planes at a spacing therefrom.

9. Light-weight structural element according to one of the preceding claims, **characterized in that** a cylindrical cavity (2) is formed around an axis of rotation (6), and is aligned colinearly therewith.

10. Light-weight structural element according to one of the preceding claims, **characterized in that** at least one functional surface (3) forms an optical reflector.

11. Light-weight structural element according to one of the preceding claims, **characterized in that** it is formed from a metal, a metal alloy, a ceramic, a glass or a glass ceramic.

12. Light-weight structural element according to one of the preceding claims, **characterized in that** cylindrical cavities are aligned parallel to the base surface and/or cover surface.

13. Light-weight structural element according to one of the preceding claims, **characterized in that** cylindrical cavities of different length are present.

14. Light-weight structural element according to one of the preceding claims, **characterized in that** a surface structure is formed on at least one functional surface.

15. Light-weight structural element according to one of the preceding claims, **characterized in that** it is formed as an electrostatic holding element.

16. Light-weight structural element according to one of the preceding claims, **characterized in that** at least one perforation or at least one cylindrical cavity is guided through the base surface, cover surface and/or at least one functional surface (3, 5).

## Revendications

1. Elément structurel de construction allégé comportant une surface de fond et une surface de recouvrement disposée face à celle-ci,
**caractérisé en ce que**, à l'intérieur de l'élément structurel de construction allégé, plusieurs cavités (1, 2) de forme cylindrique, orientées respectivement parallèlement les unes aux autres, s'étendent jusqu'à au moins un bord extérieur de l'élément structurel de construction allégé et sont configurées sous la forme d'un alésage borgne ou traversant, et
la surface de fond et / ou la surface de recouvrement forment une surface fonctionnelle (3) fermée.

2. Elément structurel de construction allégé selon la revendication 1, **caractérisé en ce que** les cylindres creux cylindriques (1, 2) sont configurés respectivement dans un plan commun.

3. Elément structurel de construction allégé selon l'une quelconque des revendications précédentes, **caractérisé en ce que** les cavités cylindriques (1, 2) sont réunies en au moins deux groupes, moyennant quoi les cavités cylindriques (1, 2) d'un groupe respectif sont parallèles les unes aux autres, et les cavités cylindriques d'un autre groupe sont orientées selon un même angle respectif compris entre 60° et 90° par rapport aux autres et / ou les cavités cylindriques (1, 2) des groupes sont disposées en étant décalées les unes par rapport aux autres dans des plans différents.

4. Elément structurel de construction allégé selon l'une quelconque des revendications précédentes, **caractérisé en ce que** les cylindres creux cylindriques (1, 2) sont disposés dans au moins deux plans orientés parallèlement l'un à l'autre, et les cavités cylindriques (1, 2) agencées dans des plans différents sont également disposées parallèlement les unes aux autres.

5. Elément structurel de construction allégé selon l'une quelconque des revendications précédentes, **caractérisé en ce qu'**entre deux plans dans lesquels sont configurées les cavités cylindriques (1, 2), sont disposés les fibres neutres et / ou le centre de gravité.

6. Elément structurel de construction allégé selon l'une quelconque des revendications précédentes, **caractérisé en ce que** la fraction des cavités cylindriques (1, 2) représente au moins 40 % du volume global.

7. Elément structurel de construction allégé selon l'une quelconque des revendications précédentes, **caractérisé en ce que** les cavités cylindriques (1, 2) sont disposées dans le plan du centre de gravité et / ou des fibres neutres de l'élément structurel de construction allégé respectif.

8. Elément structurel de construction allégé selon la revendication 5, **caractérisé en ce que** la fraction en volume des cavités cylindriques (1, 2) dans le plan du centre de gravité et / ou des fibres neutres est supérieure à celle des plans éloignés.

9. Elément structurel de construction allégé selon l'une quelconque des revendications précédentes, **caractérisé en ce qu'**une cavité cylindrique (2) est configurée autour d'un axe de rotation (6) et est orientée en étant alignée par rapport à celui-ci.

10. Elément structurel de construction allégé selon l'une quelconque des revendications précédentes, **caractérisé en ce qu'**au moins une surface fonctionnelle (3) forme un réflecteur optique.

11. Elément structurel de construction allégé selon l'une quelconque des revendications précédentes, **caractérisé en ce qu'**il est constitué d'un métal, d'un alliage métallique, d'une céramique, d'un verre ou d'une céramique vitrifiée.

12. Elément structurel de construction allégé selon l'une quelconque des revendications précédentes, **caractérisé en ce que** les cavités cylindriques sont orientées parallèlement à la surface de fond et / ou à la surface de recouvrement.

13. Elément structurel de construction allégé selon l'une quelconque des revendications précédentes, **caractérisé en ce qu'**il existe des cavités cylindriques ayant des longueurs différentes.

14. Elément structurel de construction allégé selon l'une quelconque des revendications précédentes, **caractérisé en ce que**, sur au moins une surface fonctionnelle, est agencée une structure superficielle.

15. Elément structurel de construction allégé selon l'une quelconque des revendications précédentes, **caractérisé en ce qu'**il est configuré sous la forme d'un élément de maintien électrostatique.

16. Elément structurel de construction allégé selon l'une quelconque des revendications précédentes, **caractérisé en ce qu'**au moins un ajour ou au moins une cavité cylindrique est ménagée au travers de la surface de fond, de la surface de recouvrement et / ou au moins d'une surface fonctionnelle (3, 5).
